# EUROPEAN PATENT APPLICATION

(11) **EP 4 538 831 A1**
(43) Date of publication of application: **16.04.2025**
(21) Application number: 23849190.6
(22) Date of filing: 13.07.2023
(51) Int. Cl.: G06F 3/01

(54) **DEVICE CONTROL METHOD, AND DEVICES**

(30) Priority: 03.08.2022 CN 202210930301
(71) Applicant: Huawei Technologies Co., Ltd., Shenzhen, Guangdong 518129 (CN)
(72) Inventor: WANG, Jintao, Shenzhen, Guangdong 518129 (CN); WANG, Qing, Shenzhen, Guangdong 518129 (CN); LIU, Fengjuan, Shenzhen, Guangdong 518129 (CN)
(74) Representative: Goddar, Heinz J.
(86) International application number: PCT/CN2023/107265
(87) International publication number: WO 2024/027481

(57) **Abstract**

A device control method is provided. The method includes: displaying comment information on a screen of a first device, where the comment information is used to visualize an operation interface of at least a part of functions of a second device, the first device is an augmented reality device or a virtual reality device, and the second device is a device in the physical world; determining a third device, where the third device is a device in the physical world; and transmitting at least a part of data associated with the comment information to the third device. In this way, in a multi-device collaboration scenario, the first device visualizes operation interfaces of some functions of the second device, so that a user can control these operation interfaces, and after determining the third device, the user can hop the operation interfaces of the functions of the second device to the third device. In this way, the user can conveniently control data to be hopped between the second device and the third device, thereby improving convenience of data hop between the second device and the third device, and improving user experience.

## Description

This application claims priority to Chinese Patent Application No. 202210930301.9, filed with the China National Intellectual Property Administration on August 3, 2022 and entitled "DEVICE CONTROL METHOD AND DEVICE", which is incorporated herein by reference in its entirety.

### TECHNICAL FIELD

This application relates to the field of terminal technologies, and in particular, to a device control method and a device.

### BACKGROUND

In daily life, a user may use a plurality of devices at the same time in a same scenario. Therefore, newly launched devices more emphasize a multi-device collaboration capability. Data hop between devices, for example, moving a file/page/window from one device to another, is an important function in a multi-device collaboration scenario. However, currently, when data is to be hopped between devices, the user cannot control the to-be-hopped data, resulting in poor convenience of data hop between devices. Therefore, how to improve convenience of data hop between devices is an urgent technical problem that needs to be resolved currently.

### SUMMARY

This application provides a device control method, a device, a computer storage medium, and a computer product, to improve convenience of data hop between devices and improve user experience.

According to a first aspect, this application provides a device control method. The method may include: displaying comment information on a screen of a first device, where the comment information is used to visualize an operation interface of at least a part of functions of a second device; determining a third device; and transmitting at least a part of data associated with the comment information to the third device. The first device is an augmented reality (augmented reality, AR) device or a virtual reality (virtual reality, VR) device, and both the second device and the third device are devices in the physical world.

In this way, the first device visualizes operation interfaces of some functions of the second device, so that a user can control these operation interfaces, and after determining the third device, the user can hop the operation interfaces of the functions of the second device to the third device. In this way, the user can conveniently control data to be hopped between the second device and the third device, thereby improving convenience of data hop between the second device and the third device.

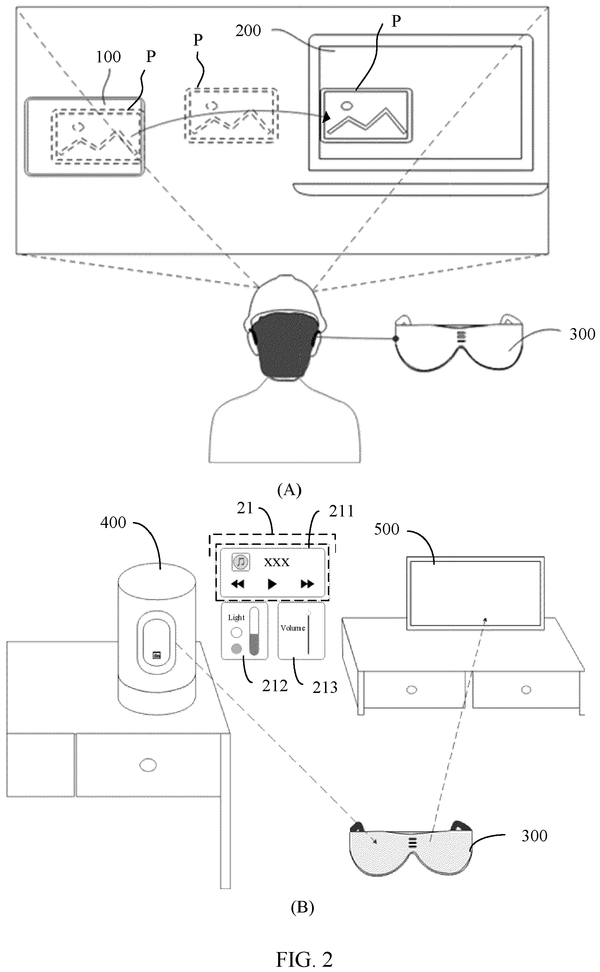

For example, the first device may be AR glasses or VR glasses. For example, the first device may be a device 300 shown in (B) in FIG. 2, the second device may be a device 400 shown in (B) in FIG. 2, and the third device may be a device 500 shown in (B) in FIG. 2.

For example, the comment information may be understood as an operation interface, and the user may control the second device by using the comment information. A location of the comment information on the screen of the first device may be but is not limited to being located between a location corresponding to the second device on the screen and a location corresponding to the third device on the screen. In addition, the physical world is an objective world, and may be understood as a set of all substances and phenomena, for example, a natural world in which human beings are located. An environment in the physical world is real, not fictional.

For example, at least the part of data associated with the comment information may be data related to a function that is of the second device and that is selected by the user. For example, when the second device is a sound box, if the comment information is to visualize an operation interface of a playing function of the sound box, at least the part of data associated with the comment information may be one or more of a name of music currently played by the sound box, an audio stream of the music, a singer of the music, a background picture of the music, or the like.

In a possible implementation, before the transmitting at least a part of data associated with the comment information to the third device, the method further includes: determining that a first operation is obtained, where the first operation is an operation of selecting the comment information. For example, the user may select the comment information in a manner like pinching the comment information with two fingers, tapping or double-tapping the comment information, or moving a cursor to an area in which the comment information is located.

In a possible implementation, the method further includes: in response to a movement operation for the comment information, controlling the comment information to move.

In a possible implementation, the controlling the comment information to move on the screen specifically includes: determining that the movement operation is an operation of moving from the second device to the third device; and controlling the comment information to move on the screen from a current location of the comment information to a location corresponding to the third device on the screen. In this way, after the user initiates an operation of moving the comment information, the comment information may be synchronously moved on the screen of the first device upon the movement operation of the user, so that the user can perceive movement of the comment information. This improves user experience.

In a possible implementation, the determining a third device specifically includes: A degree of coincidence between an area occupied by the comment information on the screen and a target area on the screen is greater than a preset value, where the target area is an area corresponding to a display area of the third device on the screen. In other words, when the degree of coincidence between the comment information viewed by the user on the screen of the first device and the display area of the third device is greater than the preset value, it may be determined that the user has determined the third device. In addition, the third device may be determined in a manner like the following: The user may alternatively double-tap or tap the third device. In this case, after obtaining the tap on the third device, the first device may determine the third device. Alternatively, the user moves the cursor to the third device and holds the cursor for preset duration (for example, 2s or 3s) to determine the third device.

In a possible implementation, the comment information includes a plurality of pieces of sub-information, and each piece of sub-information is associated with one function of the second device. The plurality of pieces of sub-information are displayed in a stacked manner or displayed in a paged manner. In this way, more comment information can be displayed by expanding a level/switching a page.

In a possible implementation, before the displaying comment information on a screen of a first device, the method further includes: in response to an obtained first instruction, sending a first message to the second device, where the first message is used to obtain information related to the operation interface of at least the part of functions of the second device; and obtaining a second message sent by the second device, where the second message includes the information related to the operation interface of at least the part of functions of the second device. In this way, the operation interface of at least the part of functions of the second device is visualized. For example, the first instruction may be understood as an instruction for obtaining the information related to the operation interface of at least the part of functions of the second device. For example, a mapping relationship between the instruction and a target gesture may be preset. After obtaining the target gesture delivered by the user, the first device may determine that the instruction is obtained.

According to a second aspect, this application provides a device control method, which may be applied to a first device. The method may include: determining that at least a part of a target object on a second device is located outside a display area of the second device; and displaying the target object on a screen of the first device. The first device is an AR device or a VR device, and the second device is a device in the physical world.

In this way, in a process in which the user moves the target object on the second device, when a part of the target object is located outside the display area of the second device, the target object may be displayed on the first device, so that the user can observe a status of the target object existing when the target object is located outside the display area of the second device. In this way, the user can conveniently control the target object even if the target object moves out of the display area of the second device. This improves user experience.

For example, that at least a part of the target object is located outside a display area of the second device may be understood as that, in the display area of the second device, the target object is not completely displayed. In other words, only a part of content of the target object is displayed. For example, when the target object is a picture, and the second device displays only a part of content of the picture, it may be understood as that a part of the picture is located outside the display area of the second device.

For example, the displaying the target object on a screen of the first device may be displaying all of the target object, that is, displaying all content of the target object; or may be displaying a part of the target object, that is, displaying a part of content of the target object.

In a possible implementation, the determining that at least a part of a target object on a second device is located outside a display area of the second device specifically includes: obtaining a first message sent by the second device, where the first message includes the target object and a first area in which the target object is currently located; and determining that at least a part of the first area is located outside the display area of the second device.

Further, the displaying the target object on a screen of the first device specifically includes: in response to the first message, determining a second area corresponding to the first area on the screen of the first device; and displaying the target object in the second area.

In a possible implementation, at least a part of the second area is located outside an area corresponding to the display area of the second device on the screen of the first device.

In a possible implementation, transparency of the target object in the second area is greater than a preset value. In this way, visual impact caused by a ghost image caused by file misplacement is reduced. This improves user experience.

In a possible implementation, after the displaying the target object in the second area, the method further includes: obtaining a third area in which the target object sent by the second device is currently located, where the third area is different from the first area; determining a fourth area corresponding to the third area on the screen, where the fourth area is different from the second area; and displaying the target object in the fourth area. In this way, after a location of the target object in the physical world changes, the first device may synchronously update a location of the target object on the screen of the first device, so that the user can perceive a location change of the target object in real time. This improves user experience.

In a possible implementation, after the displaying the target object on a screen of the first device, the method further includes: determining that the target object on the second device is located in a display area of a third device, where the third device is a device in the physical world, and there is a gap between the second device and the third device; and transmitting at least a part of data associated with the target object to the third device, and/or stopping displaying the target object on the screen. In this way, after the target object is located in the display area of the third device, at least the part of data associated with the target object is transmitted to the third device, so that the third device can display the target object. In this way, the user browses the target object on the third device and controls the target object. This improves user experience. For example, the first device may be a device 300 shown in (A) in FIG. 2, the second device may be a device 100 shown in (A) in FIG. 2, and the third device may be a device 200 shown in (A) in FIG. 2.

According to a third aspect, this application provides a device control method, including: When a user wears a first device, a first device detects that the user triggers generation of a first signal on the first device, where the first device is an augmented reality device, a virtual reality device, or an extended reality device; the first device sends a data obtaining request to a second device; the first device obtains collaboration data sent by the second device, where the collaboration data is data of a preset type; and the first device displays the collaboration data. In this way, the user can view the collaboration data in virtual space presented by the first device. This increases content richness of the first device and improves user experience.

In a possible implementation, when the user operates a physical button or a virtual button preset on the first device, the first device detects the first signal. Alternatively, when the first device obtains a voice made by the user and verbal content included in the voice is preset content, the first device detects the first signal. Alternatively, when the first device obtains a gesture made by the user and the gesture is a preset gesture, the first device detects the first signal. Alternatively, when the first device identifies that a part of a location of a visual focus of the user at least partially coincides with a location of the second device, the first device detects the first signal.

In a possible implementation, before that the first device sends a data obtaining request to a second device, the method further includes: The first device obtains the location of the visual focus of the user; and when the location of the visual focus of the user at least partially coincides with the location of the second device, the first device establishes a communication connection to the second device.

According to a fourth aspect, this application provides a device control method, including: A first device obtains collaboration data sent by a second device, where the collaboration data is sent by the second device after a first operation of a user is detected, the first operation is used to trigger the second device to send the collaboration data to the first device, and the first device is an augmented reality device, a virtual reality device, or an extended reality device; and the first device displays the collaboration data. In this way, the user can view the collaboration data in virtual space presented by the first device. This increases content richness of the first device and improves user experience.

In a possible implementation, before that the first device displays the collaboration data, the method further includes: The first device obtains a first area in which a target object sent by the second device is currently located, where the target object is an object presented by the second device based on the collaboration data, and both the collaboration data and the first area are sent by the second device when it is detected that at least a part of the target object is located outside a display area of the second device.

In a possible implementation, that the first device displays the collaboration data specifically includes: The first device determines a second area corresponding to the first area on a screen of the first device; and the first device displays the collaboration data in the second area on the screen of the first device.

In a possible implementation, at least a part of the second area is located outside an area corresponding to the display area of the second device on the screen.

In a possible implementation, transparency of the collaboration data in the second area is greater than a preset value.

In a possible implementation, after that the first device displays the collaboration data in the second area on the screen of the first device, the method further includes: The first device obtains a third area in which the target object sent by the second device is currently located, where the third area is different from the first area; the first device determines a fourth area corresponding to the third area on the screen of the first device, where the fourth area is different from the second area; and the first device displays the collaboration data in the fourth area on the screen of the first device.

In a possible implementation, after that the first device displays the collaboration data in the second area on the screen of the first device, the method further includes: The first device determines that the target object on the second device is located in a display area of a third device, where there is a gap between the second device and the third device; and the first device transmits the collaboration data to the third device, and/or stops displaying the collaboration data on the screen.

In a possible implementation, the first operation is an operation of moving, by the user, an object related to the collaboration data to a preset location. Alternatively, the first operation is an operation of making a preset gesture by the user. Alternatively, the first operation is an operation of triggering, by the user, a physical button or a virtual button preset on the second device. Alternatively, the first operation is an operation of making, by the user, a voice including preset content. Alternatively, the first operation is an operation of starting a preset object on the second device by the user.

According to a third aspect, this application provides a device, including: at least one memory, configured to store a program; and at least one processor, configured to execute the program stored in the memory. When the program stored in the memory is executed, the processor is configured to perform the method according to any one of the first aspect or the possible implementations of the first aspect, or perform the method according to any one of the second aspect or the possible implementations of the second aspect. For example, the device may be but is not limited to a device 300 shown in FIG. 2.

According to a fourth aspect, this application provides a computer-readable storage medium. The computer-readable storage medium stores a computer program, and when the computer program is run on a processor, the processor is enabled to perform the method according to any one of the first aspect or the possible implementations of the first aspect, or perform the method according to any one of the second aspect or the possible implementations of the second aspect.

According to a fifth aspect, this application provides a computer program product. When the computer program product runs on a processor, the processor is enabled to perform the method according to any one of the first aspect or the possible implementations of the first aspect, or perform the method according to any one of the second aspect or the possible implementations of the second aspect.

It may be understood that, for beneficial effects of the third aspect to the fifth aspect, refer to the related descriptions in the first aspect or the second aspect. Details are not described herein again.

### BRIEF DESCRIPTION OF DRAWINGS

The following briefly describes the accompanying drawings used in descriptions of embodiments or the conventional technology.
FIG. 1 is a diagram of an application scenario according to an embodiment of this application;
FIG. 2 is a diagram of another application scenario according to an embodiment of this application;
FIG. 3 is a diagram of a hardware structure of a device according to an embodiment of this application;
FIG. 4 is a diagram of a hardware structure of another device according to an embodiment of this application;
FIG. 5 is a diagram of content displayed on an optical module on a device according to an embodiment of this application;
FIG. 6 is a schematic flowchart of a device control method according to an embodiment of this application;
FIG. 7 is a schematic flowchart of another device control method according to an embodiment of this application;
FIG. 8 is a diagram of moving related visualized content after a button on a device is visualized according to an embodiment of this application;
FIG. 9 is a schematic flowchart of still another device control method according to an embodiment of this application; and
FIG. 10 is a schematic flowchart of yet another device control method according to an embodiment of this application.

### DESCRIPTION OF EMBODIMENTS

The term "and/or" in this specification describes only an association relationship for associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In the specification and claims of this application, the terms "first", "second", and the like are used for distinguishing between different objects, but are not used for describing a particular order of the objects. For example, a first response message, a second response message, and the like are used for distinguishing between different response messages, but are not used for describing a particular order of the response messages.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In the descriptions of embodiments of this application, unless otherwise specified, "a plurality of" means two or more. For example, a plurality of processing units are two or more processing units, and a plurality of elements are two or more elements.

First, technical terms used in embodiments of this application are described.

### (1) Collaboration data

The collaboration data sent by a device A to a device B may be at least a part of data that is of an application run on the device A and that is expected to be sent by the device A to the device B for display. For example, the collaboration data may include data of a single application window, a part of data in an application window, screen display data, screenshot data, virtual screen data, or the like. The screen display data is data displayed on a screen of the device A. For example, a browser window is displayed on the device A but is not displayed in full screen, and desktop data such as a desktop icon, a taskbar, and a wallpaper is further displayed on the screen. In this case, the screen display data may include browser data, the desktop data, and a location distribution relationship between the device A and the device B. The virtual screen data is a data stream that is obtained based on an initial desktop of the device A/a desktop mirror obtained at a moment at which a collaborative connection is established and that is not actually displayed on the physical screen of the device A. For example, a user may preset that data of an application is to be displayed on a virtual screen. In this case, after the user starts the application, the data of the application may be displayed on the virtual screen.

The following describes the technical solutions provided in this application.

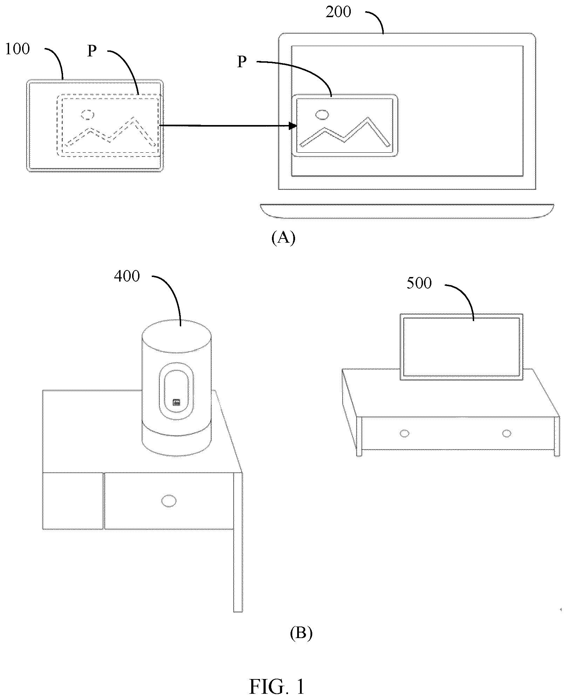

For example, FIG. 1 shows an application scenario. As shown in (A) in FIG. 1, a device 100 and a device 200 are in a same network, and each of the device 100 and the device 200 has a display. A picture P is displayed on the display of the device 100, and a user may move the picture P on the device 100 to the device 200. After the user moves the picture P to the device 200, the picture P may be displayed on the display of the device 200. However, in a process in which the user moves the picture P from the device 100 to the device 200, when the picture P is located between the device 100 and the device 200, the picture P disappears from a field of view of the user. In this case, the picture P is invisible to the user. Therefore, the user cannot implement a visual operation. The user does not know a location to which the picture P moves and a moment at which the picture P can reach the display of the device 200. This weakens a capability of the user to control an operation.

As shown in (B) in FIG. 1, a device 400 and a device 500 are in a same network. The device 400 has no display, and the device 500 has a display. In this scenario, data in the device 400 cannot be hopped to the device 500. In other words, data hop cannot be implemented in this scenario.

To resolve the problem, an embodiment of this application provides a device control method, to implement visualized data hop from a device with a screen (namely, a device having a display) to a device with a screen, or implement visualized data hop from a device without a screen (namely, a device not having a display) to a device with a screen in a multi-device collaboration scenario. This improves convenience of data hop between the devices.

For example, FIG. 2 shows another application scenario. As shown in (A) in FIG. 2, in addition to devices 100 and 200, a device 300 is further included in this scenario. Each of the device 100 and the device 200 has a display. The devices 100, 200, and 300 may discover one another through short-range communication like Bluetooth, and join a same network. In a process in which a user moves a picture P from the device 100 to the device 200, when the picture P is located between the device 100 and the device 200, the picture P may be displayed on a screen of the device 300. In this way, in the process in which the user moves the picture P, the picture P is always visible to the user. Therefore, the user can implement a visual operation. The user can know a location to which the picture P moves and a moment at which the picture P can reach the display of the device 200. This improves convenience of data hop between the devices. It should be understood that the picture P may be replaced with another file, for example, a video file or a text file. In this scenario, each of the device 100 and the device 200 may be an electronic device having a display, for example, a mobile phone, a computer, or a television. The device 300 may be an electronic device that may display virtual space, for example, a head-mounted device like augmented reality (augmented reality, AR) glasses or virtual reality (virtual reality, VR) glasses.

As shown in (B) in FIG. 2, in addition to devices 400 and 500, a device 300 is further included in this scenario. The device 400 does not have a display, and the device 500 has a display. The devices 400, 500, and 300 may discover one another through short-range communication like Bluetooth, and join a same network. An operation interface of some functions of the device 400 may be displayed on a screen of the device 300. For example, an operation interface of a function corresponding to a button on the device 400 may be displayed, and the operation interface may be presented in a form of card, for example, a card 212 corresponding to a light adjustment button and a card 213 corresponding to a volume adjustment button that are displayed in an area 21 in (B) in FIG. 2; and/or an operation interface corresponding to a playing function of the device 400 may be displayed, and the interface may also be presented in a form of card, for example, a card that may display content being played on the device 400, like a card 211 that is displayed in the area 21 in (B) in FIG. 2 and that corresponds to music. Then, the user may control the operation interface that is of some functions of the device 400 and that is displayed on the screen of the device 300, and move the operation interface to the device 500. In this way, visualized data hop from a device without a screen to a device with a screen is implemented. This improves convenience of data hop between the devices. In this scenario, the device 400 may be an electronic device not having a display, for example, a sound box, and the device 500 may be an electronic device having a display, for example, a mobile phone, a computer, or a television. The device 300 may be an electronic device that may display virtual space, for example, a head-mounted device like AR glasses or VR glasses.

It should be understood that, in (A) in FIG. 2, the device 300 may continuously establish a connection to the device 100 or 200 through the network, or may establish a connection to the device 100 or 200 in phases. For example, when the device 100 is within a visible range of the device 300, the device 300 may establish a connection to the device 100. When the device 200 is within the visible range of the device 300, the device 300 may establish a connection to the device 100. Similarly, in (B) in FIG. 2, the device 300 may continuously establish a connection to the device 400 or 500 through the network, or may establish a connection to the device 400 or 500 in phases. For example, when the device 400 is within a visible range of the device 300, the device 300 may establish a connection to the device 400. When the device 500 is within a visible range of the device 300, the device 300 may establish a connection to the device 500.

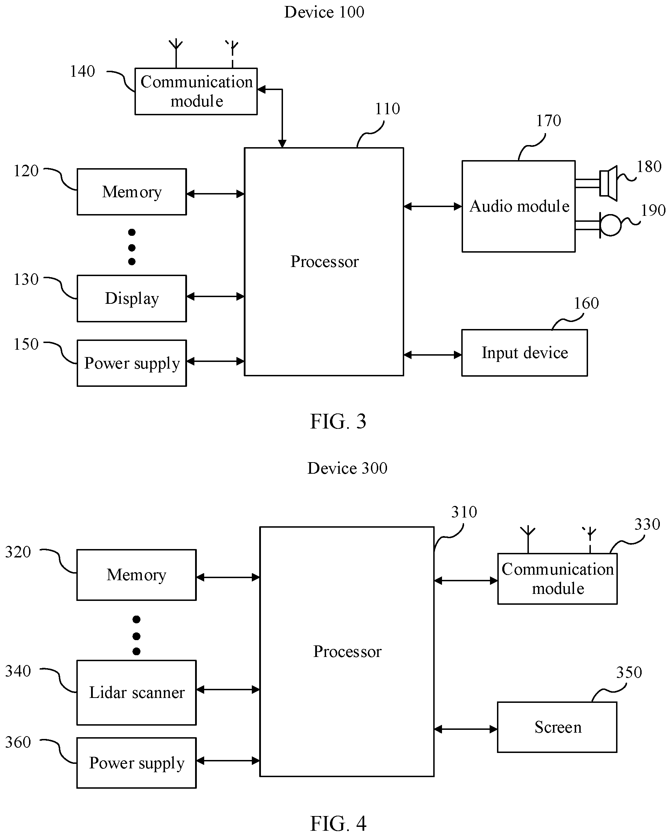

For example, FIG. 3 shows a hardware structure of a device 100. As shown in FIG. 3, the device 100 may include a processor 110, a memory 120, a display 130, a communication module 140, a power supply 150, an input device 160, an audio module 170, a speaker 180, and a pickup 190.

The processor 110 is a computing core and a control core of the device 100. The processor 110 may include one or more processing units. For example, the processor 110 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent components, or may be integrated into one or more processors.

In some embodiments, the processor 110 may control the display 130 to display a file like a picture, a video, or a text document. In addition, the processor 110 may further construct a coordinate system by using a location (for example, a central location or a location at a lower left corner) on the display 120 as a reference location, and determine, based on the constructed coordinate system, an area occupied by the file displayed on the display 130.

In some embodiments, an area outside the display 130 may be understood as a virtual screen of the device 100. The virtual screen is not a real screen, but a fictional screen. A file on the device 100 may be displayed on the virtual screen, but content displayed on the virtual screen is invisible to a user. When the user moves a file displayed on the device 100, the processor 110 may determine, based on a moving speed, a moving direction, and the like of the user, an area occupied by the file moved by the user on the display 130 of the device 100 or on the virtual screen.

The memory 120 may store a program, and the program may be run by the processor 110, so that the processor 110 is enabled to perform at least some or all of the steps in the method provided in embodiments of this application. The memory 120 may further store data. The processor 110 may read the data stored in the memory 120. The memory 120 and the processor 110 may be separately disposed. Alternatively, the memory 120 may be integrated into the processor 110.

The display 130 may be configured to display a file like an image, a video, or a text document. The display 130 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The communication module 140 may include but is not limited to a wireless communication module. The communication module 140 may provide a wireless communication solution that is applied to the electronic device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near-field communication (near-field communication, NFC) technology, an infrared (infrared, IR) technology, and the like. For example, the communication module 140 may be configured to communicate between the device 100 and another device (for example, the device 200 or the device 300), to complete data exchange and the like. In some embodiments, the communication module 140 may be integrated into the processor 110, or may be disposed separately from the processor 110.

In some embodiments, when the device 100 meets a specific condition, the device 100 may transmit, to the device 300 via the communication module 140, information such as a file displayed on the device 100 and an area that is in a display area or the virtual screen of the device 100 and that is occupied by the file, so that the file on the device 100 is displayed by a screen of the device 300. For example, the condition that the device 100 needs to meet may include one or more of the following: The device 100 establishes a connection to the device 300, at least a part of an area occupied by the file displayed on the display 130 of the device 100 moves out of the display 130, the device 100 obtains an instruction that is delivered by the user and that is used to move a file, or the like.

In some embodiments, after the area that is occupied by the file moved by the user and that is determined by the processor 110 reaches an area in which a display of the device 200 is located, the device 100 may hop, to the device 200 via the communication module 140, the file displayed on the device 100 and an area currently occupied by the file, so that the device 200 displays the file. In addition, the device 100 may alternatively hop, to the device 200 via the communication module 140 at any time before a file moved by the user reaches an area in which a display of the device 200 is located, the file displayed by the device 100, an area currently occupied by the file, and the like.

The power supply 150 may be configured to supply power to components in the device 100. In some embodiments, the power supply 150 may be a battery, for example, a rechargeable battery.

The input device 160 may be an apparatus for information exchange between the user and the device 100. For example, the input device 160 may be but is not limited to a keyboard, a mouse, a handwriting input board, a voice input apparatus, or the like.

The audio module 170 may be configured to convert an input analog audio electrical signal into a digital audio signal, or may be configured to convert a digital audio signal into an analog audio electrical signal for output. The audio module 170 may transmit an audio signal with the communication module 140, but is not limited thereto. The audio module 170 may be configured to encode and decode an audio signal. In some embodiments, the audio module 170 may be disposed in the processor 110, or some functional modules in the audio module 170 are disposed in the processor 110.

The speaker 180, also referred to as a "loudspeaker", is configured to convert an analog audio electrical signal into a sound signal.

The pickup 190 may also be referred to as a "mike" or a "sound conducting device" and is configured to convert a sound signal into an analog audio electrical signal. The device 100 may include at least one pickup 190. The pickup 190 may capture a sound in an environment in which the device 100 is located, and convert the captured sound into an analog audio electrical signal. In some embodiments, the pickup 190 may be a microphone, or may be a microphone array.

It may be understood that the structure shown in this embodiment of this application does not constitute a specific limitation on the device 100. In some other embodiments of this application, the device 100 may include more or fewer components than those shown in the figure, or combine some components, or split some components, or have different component arrangements. The components shown in the figure may be implemented by hardware, software, or a combination of software and hardware.

It should be understood that, for a hardware structure of the device 200, 400, or 500, refer to the hardware structure of the device 100. Details are not described herein again.

In this embodiment, the device 200 or 500 may have a same hardware structure as the device 100, or may have a different hardware structure but include at least a communication module and a display. The communication module in the device 200 is mainly configured to exchange data with another device (for example, the device 100 or the device 300). The display is mainly configured to display data that a user moves from the device 100 to the device 200, and the like. The communication module in the device 500 is mainly configured to exchange data with another device (for example, the device 400 or the device 300). The display is mainly configured to display data that a user moves from the device 400 to the device 500, and the like.

The device 400 may have a hardware structure different from that of the device 100. However, the device 400 may include but is not limited to at least no display, and includes at least a communication module. The communication module in the device 400 is mainly configured to exchange data with another device (for example, the device 500 or the device 300), and the like. In some embodiments, the device 400 may transmit information related to some functions of the device 400 to the device 300, so that an operation interface of these functions is displayed on the screen of the device 300. For example, when the device 400 is a sound box, the sound box may transmit, to the device 300, information about music currently being played by the sound box, so that an operation interface related to music playing is displayed on the screen of the device 300. The operation interface may be presented in a form of card. For example, the card 211 in the area 21 in (B) in FIG. 2 is displayed. In addition, the sound box may alternatively transmit, to the device 300, information that is associated with a button on the sound box and that is selected by the user on the device 300, so that an operation interface related to a function of the button selected by the user is displayed on the screen of the device 300. The operation interface may be presented in a form of card, but is not limited thereto. For example, the card 211, 212, or 213 in the area 21 in (B) in FIG. 2 is displayed. In some embodiments, when the user moves the information displayed on the screen of the device 300 to the device 500, the device 400 may further transmit related information to the device 500, so that the device 500 displays the related information. For example, still with reference to (B) in FIG. 2, after the user moves the card 211 to the device 500, the device 400 may transmit music data corresponding to the card 211 to the device 500, so that the device 500 plays corresponding music and displays the card corresponding to the music. In some embodiments, all information displayed by the device 300 may be referred to as comment information. For example, the comment information may be understood as an operation interface, and the user may control a corresponding device by using the comment information.

For example, FIG. 4 shows a hardware structure of a device 300. As shown in FIG. 3, the device 300 may include a processor 310, a memory 320, a communication module 330, a lidar scanner 340, a screen 350, and a power supply 360.

The processor 310 is a computing core and a control core of the device 100. The processor 310 may include one or more processing units. For example, the processor 310 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent components, or may be integrated into one or more processors.

In some embodiments, the processor 310 may perform modeling based on data of an environment captured by the lidar scanner 340, and determine a size of a device in the environment and a location of the device in the environment relative to the device 300. Then, a display area, a display size, and the like that are on the screen 350 of the device 300 and that correspond to the device in the environment may be determined by using a preset rule or model. For example, still with reference to (A) in FIG. 2, the processor 310 may determine, based on the data of the environment captured by the lidar scanner 340, sizes of the device 100 and the device 200 and locations of the devices 100 and 200 relative to the device 300, and may determine, by using the preset rule or model, display areas and display sizes that are on the screen 350 of the device 300 and that correspond to the device 100 and the device 200. Similarly, still with reference to (B) in FIG. 2, the processor 310 may determine display areas and display sizes that are on the screen 350 of the device 300 and that correspond to the device 400 and the device 500.

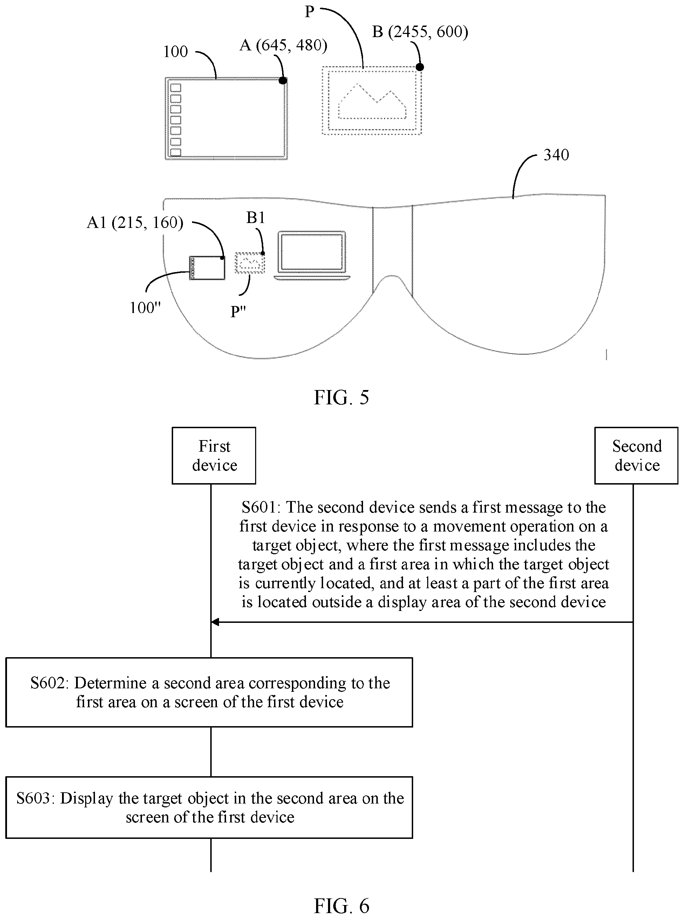

For example, the device 300 may perform modeling for a physical environment in advance, and store locations of all physical devices in space and locations of buttons on the physical devices in space in the current physical environment. In addition, the device 300 may alternatively perform modeling for a physical environment in real time, to determine locations of physical devices and locations of buttons on the physical devices in space. Each location on a map obtained by the device 300 through modeling corresponds to a location in the physical world, and there is a mapping relationship between the two locations. In addition, after identifying an operation location of the user in the physical world, the device 300 may determine, based on a relationship between the map obtained through modeling by the device 300 and the physical world, a location corresponding to the operation location on the map obtained through modeling by the device 300, and further determine a location selected by the user. In addition, after completing modeling, the device 300 may determine, based on locations of the devices in the physical world relative to the device 300, locations that are on the screen 350 of the device 300 and that correspond to the devices in the physical world. Similarly, after completing modeling and obtaining the area occupied by the file sent by the device 100, the device 300 may also determine, based on an area occupied by the file in the physical world and a location of the device 100 relative to the device 300, an area corresponding to the file on the screen 350 of the device 300, and then display the file in the area. In addition, still with reference to (A) in FIG. 2, the processor 310 may further determine, based on the area occupied by the file displayed by the device 100 in the display area of the device 100, an area occupied when the file is displayed on the screen 350 of the device 300. For example, the area may be obtained through coordinate system conversion. For example, with reference to FIG. 5, it is assumed that coordinates of a location of a point A in an upper right corner of a device 100 are (645, 480). A device 100" may be obtained after the device 100 is projected onto a lens of an optical module 340 of a device 300, and coordinates of a point A1 corresponding to the point A on the device 100 on the device 100" are (215, 160). After the user moves a picture P on the device 100 to a location shown in FIG. 5, coordinates of a point B in an upper right corner of the picture P are (2455, 600). In this case, coordinates of a point B1 corresponding to the point B on the optical module 340 may be determined based on a coordinate correspondence between the point A and the point A1. The coordinates of the point B1 are: x=2445/(645/215)=815, and y=600/(480/160)=200, namely, (815, 200). In this way, a location of a picture P" that is to be displayed on the optical assembly 350 and that corresponds to the picture P may be determined, and the picture P" may be further displayed.

Still with reference to (B) in FIG. 2, the processor 310 may obtain, via the communication module 330, information that is sent by the device 400 and that is related to the operation interface of some functions of the device 400. In addition, the processor 310 may further obtain, from a network or a cloud, comment information such as a card that matches the information, and control the screen 350 to display the comment information. Further, the processor 310 may further control, based on a user gesture captured by the lidar scanner 340, movement of the comment information displayed on the screen 350, or control, based on voice data collected by an audio capture apparatus (not shown in the figure) like a pickup configured on the screen 350, movement of the comment information displayed on the screen 350, and the like.

It should be understood that the area corresponding to the device 100, 200, 400, or 500 on the screen 350 of the device 300 is a projection of the device 100, 200, 400, or 500 on the screen 350 in a direction opposite to a line of sight of a human eye when the human eye looks forward. The device 100, 200, 400, or 500 may not be actually displayed on the screen 350. For example, the scenario shown in (A) in FIG. 2 is used as an example. In FIG. 5, the screen 350 may display only the picture P" in a dashed line, and does not display the devices 100 and 200. The devices 100 and 200 are physical entities seen by the human eye through the screen 350. In other words, the device 100 and the device 200 are devices in the physical world. The physical world is an objective world, and may be understood as a set of all substances and phenomena, for example, a natural world in which human beings are located. An environment in the physical world is real, not fictional.

In some embodiments, still with reference to (A) in FIG. 2, the processor 310 may further perform specific processing, for example, blurring/semi-transparent processing, on a file and the like displayed on the screen 350. Therefore, when at least a part of the file is not completely moved out of the display of the device 100 or not completely enters into the display of the device 200, the file displayed on the screen 350 can coincide with the file displayed on the display of the device 100 or 200. This can reduce visual impact of a ghost image caused by file misplacement (for example, when a head shakes, the file on the screen 350 may not completely coincide with the file displayed on the display of the device 100 or 200).

The memory 320 may store a program, and the program may be run by the processor 310, so that the processor 310 is enabled to perform at least some or all of the steps in the method provided in embodiments of this application. The memory 320 may further store data. The processor 310 may read the data stored in the memory 320. The memory 320 and the processor 310 may be separately disposed. Alternatively, the memory 320 may be integrated into the processor 310.

The communication module 330 may include but is not limited to a wireless communication module. The communication module 330 may provide a wireless communication solution that is applied to the electronic device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near-field communication (near-field communication, NFC) technology, an infrared (infrared, IR) technology, and the like. For example, the communication module 330 may be configured to communicate between the device 100 and another device (for example, the device 200 or the device 300), to complete data exchange and the like. In some embodiments, the communication module 330 may be integrated into the processor 310, or may be disposed separately from the processor 310. In some embodiments, still with reference to (A) in FIG. 2, the device 300 may interact with the device 100 via the communication module 330, to obtain a display location of the file sent by the device 100 and in the physical world, original data of the file, and the like. In some embodiments, still with reference to (B) in FIG. 2, the device 300 may interact with the device 400 via the communication module 330, to obtain status information and the like sent by the device 400.

The lidar scanner 340 is mainly configured to capture an image for visual simultaneous localization and mapping (simultaneous localization and mapping, SLAM), recognize an interactive gesture, and/or the like.

The screen 350 is mainly responsible for imaging work of the device 300. In some embodiments, after obtaining, via the communication module 330, data sent by the device 100, the device 300 may reflect, through the screen 350, an image corresponding to the data to an eye of the user. In some embodiments, information presented by the screen 350 may be referred to as comment information. For example, still with reference to FIG. 5, the picture P" displayed on the screen 350 and corresponding to the picture P may be referred to as comment information. In some embodiments, when the device 300 is VR/AR glasses, the screen 350 may be a lens of the VR/AR glasses.

The power supply 360 may be configured to supply power to components in the device 300. In some embodiments, the power supply 360 may be a battery, for example, a rechargeable battery.

It may be understood that the structure shown in this embodiment of this application does not constitute a specific limitation on the device 300. In some other embodiments of this application, the device 300 may include more or fewer components than those shown in the figure, or combine some components, or split some components, or have different component arrangements. The components shown in the figure may be implemented by hardware, software, or a combination of software and hardware.

The following describes the device control method provided in embodiments of this application based on the foregoing described content.

For example, FIG. 6 shows a device control method. The method mainly relates to a first device and a second device. The first device and the second device are located in a same network. For example, the method may be applied to the scenario shown in (A) in FIG. 2. The first device may be the device 300 shown in (A) in FIG. 2, and the second device may be the device 100 shown in (A) in FIG. 2. It should be understood that, in this method, the first device may be but is not limited to an AR device or a VR device, and the second device may be but is not limited to an electronic device that has a display and that is located in the physical world.

As shown in FIG. 6, the device control method may include the following steps.

S601: The second device sends a first message to the first device in response to a movement operation on a target object, where the first message includes the target object and a first area in which the target object is currently located, and at least a part of the first area is located outside a display area of the second device. For example, the target object may be but is not limited to a file like a picture, an audio, a video, a document, or a text.

In this embodiment, in a process in which a user moves the target object on the second device, the second device may send, to the first device in response to the operation of the user, the first message including the target object and the first area in which the target object is currently located. The first area may be located outside the display area of the second device. For example, the area outside the display area of the second device may be understood as a virtual screen of the second device. The virtual screen is not a real screen, but a fictional screen. The target object in the second device may be displayed on the virtual screen, but content displayed on the virtual screen is invisible to the user.

For the first area in which the target object is currently located, the second device may determine, based on but not limited to display coordinates preconfigured on the second device, an area occupied by the target object. For example, still with reference to (A) in FIG. 2, when the target object is the picture P, an area occupied by the picture P between the device 100 and the device 200 may be referred to as the first area. In addition, an area occupied by the picture P displayed on the device 100 may also be referred to as the first area.

In some embodiments, the second device may send the first message to the first device when the second device establishes a connection to the first device, or may send the first message to the first device when the user moves the target object, or may send the first message to the first device when a part of content of the target object moves out of the display area of the second device. This is not limited herein.

In some embodiments, the target object sent by the second device to the first device may be understood as collaboration data that is related to the target object and that is sent by the second device to the first device. For example, when the target object is a picture, the collaboration data related to the target object may be a digital form in a picture file. Both the first device and the second device may present the target object by using the collaboration data. For example, when the target object is a picture, the second device may load the collaboration data related to the target object by using a picture viewer on the second device, to present the picture on the picture viewer.

S602: The first device determines, in response to the first message, a second area corresponding to the first area on a screen of the first device.

In this embodiment, after obtaining the first message, the first device may first determine the second area corresponding to the first area on the screen of the first device. For example, at least a part of the second area may be located outside an area corresponding to the display area of the second device on the screen of the first device. For example, still with reference to FIG. 5, the device 100 may correspond to the screen 350 of the device 300. The device 100 determines that an area occupied by the picture P is located outside the display area of the device 100, and an area corresponding to this area on the screen 350 is an area occupied by the picture P". For a manner in which the first device determines, in an optical module of the first device, the second area corresponding to the first area, refer to the foregoing descriptions. Details are not described herein again.

S603: The first device displays the target object in the second area on the screen of the first device.

In this embodiment, after determining the second area, the first device may display the target object in the second area on the screen of the first device. For example, still with reference to FIG. 5, the picture P" displayed by the device 300 on the screen 350 of the device 300 may be referred to as the target object. For example, when the first device is AR/VR glasses, the second area may be an area on a lens of the AR/VR glasses. Certainly, there may be one second area on each of two lenses of the AR/VR glasses. In other words, the target object may be displayed on each of the two lenses of the AR/VR glasses. For example, because at least the part of the first area is located outside the display area of the second device, at least the part of the second area may also be located outside the area corresponding to the display area of the second device on the screen of the first device. In this way, the location of the target object seen by the user corresponds to the actual location of the target object, thereby improving user experience. In some embodiments, the target object includes collaboration data related to the target object. Therefore, displaying the target object may be understood as displaying the collaboration data.

In other words, when determining that at least a part of the target object on the second device is located outside the display area of the second device, the first device may display the target object on the screen of the first device. In this way, the user may view, on the first device, a status of the target object existing when at least a part of the target object moves out of the display area of the second device. In other words, the target object is visualized outside the display area of the second device. This improves a capability of the user to control a data hop operation. For example, the first device may compare a location of the display of the second device that is obtained by the first device by performing modeling for a physical environment in which the first device is located with an obtained location that corresponds to the first area in which the target object is located and that is sent by the second device, to determine whether at least a part of the first area is located outside the display area of the second device.

In some embodiments, transparency of the target object (or the collaboration data related to the target object) in the second area may be but is not limited to being greater than a preset value, to reduce visual impact caused by a ghost image caused by file misplacement. This improves user experience.

In some embodiments, in the method shown in FIG. 6, in a process in which the user moves the target object by using the second device, the second device may send, to the first device in real time or periodically (for example, every 1s), a third area in which the target object is currently located and that is determined by the second device. Then, after obtaining the third area sent by the second device, the first device may determine a fourth area corresponding to the third area on the screen of the first device, and display the target object in the fourth area. In this way, the target object displayed on the screen of the first device can move in real time or periodically following an operation performed by the user on the second device. This improves user experience. For example, in FIG. 6, a moment at which the second device determines the first area may be earlier than a moment at which the second device determines the third area. In other words, the user first moves the target object to the first area, and then moves the target object to the third area. In this case, the first area may be different from the third area. In addition, the first device may first determine the second area, and then determine the fourth area. The fourth area is also different from the second area.

Further, when the user moves the target object on the second device to a third device, the first device may determine that the target object on the second device is located in a display area of the third device, transmit at least a part of data associated with the target object (or the collaboration data related to the target object) to the third device, and/or stop displaying the target object on the screen of the first device. For example, the first device may compare a location of a display of the third device that is obtained by the first device by performing modeling for the physical environment in which the first device is located with an obtained location that corresponds to the area in which the target object is located and that is sent by the second device, to determine that the target object on the second device is located in the display area of the third device. For example, at least the part of data associated with the target object may be a part or all of original data for constructing the target object. For example, the third device may be a device in the physical world, and there may be a specific gap between the third device and the second device. For example, the third device may be the device 200 shown in (A) in FIG. 2.

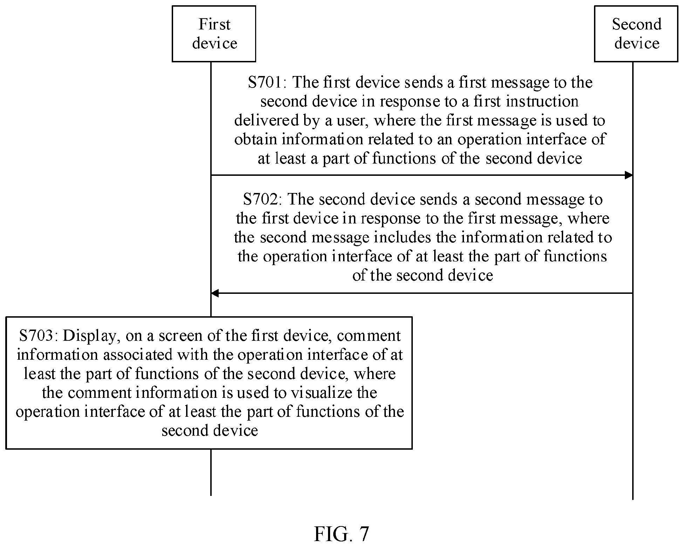

For example, FIG. 7 shows another device control method. The method mainly relates to a first device, a second device, and a third device. The first device, the second device, and the third device are located in a same network. For example, the method may be applied to the scenario shown in (B) in FIG. 2. The first device may be the device 300 shown in (B) in FIG. 2, the second device may be the device 400 shown in (B) in FIG. 2, and the third device may be the device 500 shown in (B) in FIG. 2. In some embodiments, in this method, the first device may be but is not limited to an AR device or a VR device. The second device may be an electronic device without a display, or may be an electronic device having a display. The third device may be an electronic device having a display. Both the second device and the third device are devices in the physical world.

S701: The first device sends a first message to the second device in response to a first instruction delivered by a user, where the first message is used to obtain information related to an operation interface of at least a part of functions of the second device.

In this embodiment, the first device may perform modeling, in advance or in real time, for the physical world in which the first device is located. Then, the user may control the second device by using the first device. For example, the user may pinch an area corresponding to a location of the second device in the physical world with two fingers (for example, pinching with a thumb and an index finger). Then, the first device may capture a location of the gesture of the user in the physical world, and determine a location corresponding to this location on a map obtained through modeling, to learn that the user pinches the second device in the physical world and further determine that the user delivers the first instruction. The first instruction may be used to obtain the information related to the operation interface of at least the part of functions of the second device. Certainly, the user may deliver the first instruction in another manner, for example, tapping or selection by using a cursor. This may be specifically determined based on an actual situation, and is not limited herein. For example, the user may first move the cursor to the second device, and then perform a gesture operation at any location in the field of view of the first device, to deliver the first instruction.

S702: The second device sends a second message to the first device in response to the first message, where the second message includes the information related to the operation interface of at least the part of functions of the second device.

In this embodiment, after obtaining the first message, the second device may send, to the first device, the information related to the operation interface of at least the part of functions of the second device. For example, when the second device is a sound box, the information related to the operation interface of at least the part of functions of the second device may include information about music being played by the second device, volume information, light information, and the like.

S703: The first device displays, on a screen of the first device in response to the second message, comment information associated with the operation interface of at least the part of functions of the second device, where the comment information is used to visualize the operation interface of at least the part of functions of the second device.

In this embodiment, after obtaining the second message, the first device may obtain, from a network or a cloud based on but not limited to the information related to the operation interface of at least the part of functions of the second device, a card, an interface, a widget, or the like associated with the operation interface of at least the part of functions of the second device. Then, the first device may display, on the screen of the first device, the card, the interface, the widget, or the like corresponding to the information associated with the operation interface of at least the part of functions of the second device. The card, the interface, the widget, or the like that is displayed on the screen of the first device and that corresponds to the information associated with the operation interface of at least the part of functions of the second device may be referred to as comment information associated with the operation interface of at least the part of functions of the second device. The comment information is mainly used to visualize the operation interface of at least the part of functions of the second device. For example, still with reference to (B) in FIG. 2, when the second device is the sound box, and the information associated with the operation interface of at least the part of functions of the sound box is the information about the music being played by the sound box, the volume information, and the light information, the device 300 (namely, the first device) may display the cards 211, 212, and 213 on the screen of the device 300. The cards 211, 212, and 213 are comment information associated with the operation interface of the playing function, the volume adjustment function, and the light adjustment function of the sound box. For example, when the first device is AR/VR glasses, the AR/VR glasses display the comment information on a lens of the AR/VR glasses.

In a possible implementation, when the second device has a plurality of functions, sub-information corresponding to an operation interface of each function may be displayed in the comment information by level or by page, so that more comment information is displayed by expanding a level/switching a page.

In this way, the user may view the operation interface of some functions of the second device on the first device, so that the user can perform visual control on the second device.

Further, after the first device displays, on the screen of the first device, the comment information associated with the operation interface of at least the part of functions of the second device, the user may further control movement of the comment information, and/or after determining the third device, the first device may transmit at least a part of data associated with the comment information to the third device in the physical world. For example, a location of the comment information on the screen of the first device may be but is not limited to being located between a location corresponding to the second device on the screen of the first device and a location corresponding to the third device on the screen of the first device.

In a possible implementation, the user may first select the comment information on the screen of the first device, that is, perform an operation of selecting the comment information; and then select the third device, that is, perform an operation of selecting the third device. In this case, the third device may be determined. For example, the user may select the third device by using a gesture, a voice, a cursor, or the like. For example, the user may double-tap or tap the third device. After the first device obtains the tap of the user on the third device, the first device may determine the third device. Alternatively, the user may move a cursor displayed on the screen of the first device to the third device and hold the cursor for preset duration (for example, 2s or 3s), and then the first device may determine the third device. Then, the first device may transmit at least the part of data associated with the comment information to the third device, so that the third device presents the data to the user. For example, when the second device is the sound box, the comment information may include the information related to the music being played by the sound box. In this case, at least the part of data associated with the comment information may be a name of the music being played by the sound box, and the like. In addition, after obtaining at least the part of data associated with the comment information, the third device may present the obtained data to the user through an application (application, APP) on the third device. For example, when at least the part of data associated with the comment information may be the name of the music being played by the sound box, the third device may obtain the music from a local database of the third device or from a network, and play the music through music playing software on the third device.

In another possible implementation, the user may first select the comment information on the screen of the first device. Then, the comment information is controlled to move. For example, the user may control movement of the comment information by using a gesture, a voice, a cursor, or the like.

When the comment information moves near a display area of the third device in the field of view of the first device, it may be determined that the user chooses to move the comment information to the third device. In this case, the first device may transmit at least the part of data associated with the comment information to the third device, so that the third device presents the data to the user. For example, when a degree of coincidence between an area occupied by the comment information on the screen of the first device and an area corresponding to the display area of the third device in the physical world on the screen of the first device is greater than a preset value, it may be determined that the user chooses to move at least the part of data associated with the comment information to the third device. In other words, the third device is determined.

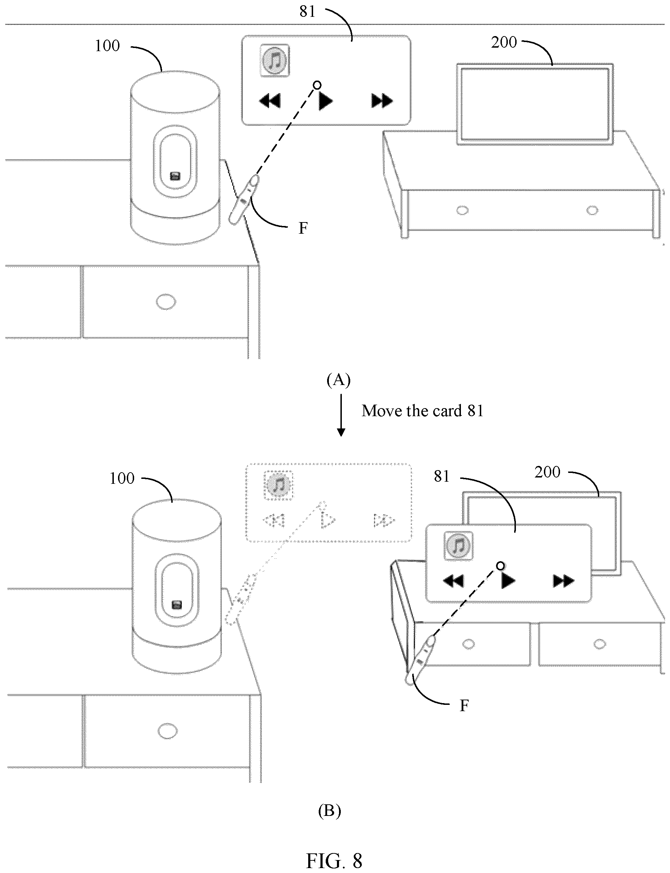

For example, as shown in FIG. 8, if the second device is a device 100 and the third device is a device 200, a card 81 is the comment information displayed by the first device. The card 81 is a card corresponding to a playing function of the device 100. The first device is not shown in the figure. As shown in (A) in FIG. 8, after the user performs, on the first device, an operation on an area in which the device 100 is located, the first device may obtain information that is related to the playing function and that is sent by the second device, and display the card 81 on the screen of the first device. Then, the user may move the card 81 by using a finger F of the user. As shown in (B) in FIG. 8, the user may move the card 81 to an area in which the device 200 is located. Then, the card 81 may be displayed by the device 200.

It should be understood that, after determining the third device, the first device may first notify the second device of information about the third device, and then the second device directly sends at least the part of data associated with corresponding comment information to the third device. The third device presents the data to the user. In addition, the first device and the second device each may send a part of data to the third device, so that the third device presents the data to the user. This may be specifically determined based on an actual situation, and is not limited herein.

In addition, when controlling the comment information to move, the user may control the comment information to move from the second device to the third device. In other words, the user may deliver an operation of controlling the comment information to move from the second device to the third device. Then, after obtaining the movement operation delivered by the user, the first device may control the comment information to move on the screen of the first device from a current location of the comment information to a location corresponding to the comment information on the screen of the third device. In this way, movement of the comment information displayed on the screen of the first device may be synchronously controlled along with the movement operation of the user, so that the user can perceive movement of the comment information. This improves user experience.

In some embodiments, in S701, the first message may be replaced with information associated with at least one button on the second device. In this case, the user may perform, in the field of view of the first device, an operation on an area in which one or more buttons on the second device are located, for example, pinching the area with two fingers, to select the one or more buttons and then deliver the first instruction. For example, the operation interface of at least the part of functions of the second device may be an operation interface of a function corresponding to at least one button on the second device. For example, when the second device is the sound box, if the user performs, in the field of view of the first device, an operation on an area in which a music playing button on the second device is located, information associated with the button may be information about music being played on the second device, for example, a music name and music playing duration.

Further, in S702, the second message may be replaced with information associated with at least one button on the second device. For example, when the user selects a volume adjustment button, the second message includes volume information.

Further, in S703, that the first device displays, on the screen of the first device, the comment information associated with the operation interface of at least the part of functions of the second device may be replaced with: The first device displays, on the screen of the first device, the comment information corresponding to the function associated with the at least one button on the second device. In this case, the comment information is used to visualize an operation interface of a function corresponding to the at least one button on the second device. For example, the buttons and the comment information may be in a one-to-one correspondence, but this is not limited.

Further, after the first device displays, on the screen of the first device, the comment information corresponding to the function associated with the at least one button on the second device, the user may further control one or more pieces of comment information to be moved, and/or move at least a part of data associated with the comment information to the third device. For details, refer to the foregoing description. Details are not described herein again.

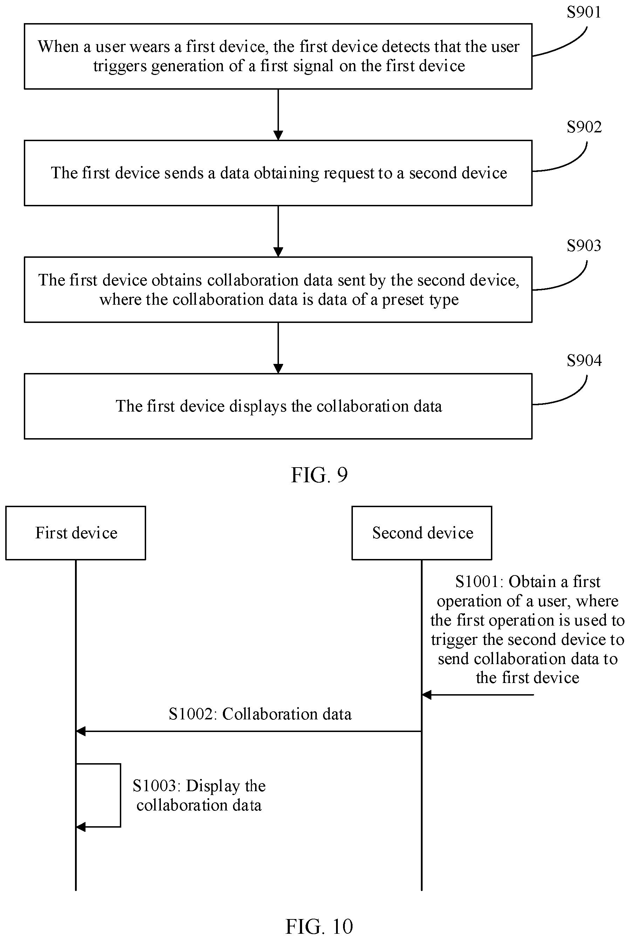

For example, FIG. 9 is a schematic flowchart of still another device control method according to an embodiment of this application. As shown in FIG. 9, the device control method may include the following steps.

S901: When a user wears a first device, the first device detects that the user triggers generation of a first signal on the first device.

In this embodiment, the first device may be but is not limited to an AR device, a VR device, or an extended reality (extended reality, XR) device, for example, the foregoing device 300. When the user wears the first device, the first device may monitor user behavior in real time or periodically (for example, every 1 second, every 5 seconds, or every 1 minute). After detecting that the user performs a specific operation, the first device may generate a signal. The signal may be used to trigger the first device to send a data obtaining request to the second device, so that the first device can obtain data of a preset type from the second device. In addition, the specific operation performed by the user may be an operation of triggering the first device to request data from the second device.

For example, an eye tracker may be configured on the first device. The eye tracker may track a visual focus of the user. When the first device identifies that a location of the visual focus of the user coincides with a location of the second device (for example, the user looks at the second device), the first device may generate the first signal. In addition, an image capture apparatus like a camera may also be configured on the first device. The image capture apparatus may capture a gesture made by the user. When the first device recognizes that the gesture made by the user is a preset gesture, the first device may generate the first signal, and/or a sound capture apparatus like a microphone may be configured on the first device. The sound capture apparatus may collect a voice made by the user. When the first device recognizes that the voice made by the user includes preset verbal content, the first device may generate the first signal. In addition, a physical button or a virtual button may also be configured on the first device. These buttons are configured to trigger the first device to request data from the second device. The user may operate the physical button or the virtual button in a manner like tapping or pressing. After the user completes the operation, the first device may generate the first signal. It should be understood that, after generating the first signal, the first device may detect the signal, and perform a subsequent step.

S902: The first device sends the data obtaining request to the second device.

In this embodiment, after detecting the first signal, the first device may send the data obtaining request to the second device. The data obtaining request is mainly used to request to obtain the data of the preset type. The user may set, on the first device or the second device, a type of data transmitted by the second device to the first device. For example, the data of the preset type specified by the user may be: an audio, a video, a picture, a file, mirror data of an entire screen of the second device, a screenshot of a screen of the second device, or the like. In addition, when the user does not set the preset type, the preset type may be a default type, and may be specifically determined based on an actual situation. This is not limited herein. For example, the second device may be but is not limited to an electronic device that is located in a same physical environment as the first device, for example, the foregoing device 100, 200, 400, or 500.

In some embodiments, when S902 is performed, if the first device does not establish a connection to the second device, the first device may first establish a communication connection to the second device. The first device may first obtain the location of the visual focus of the user. When the location of the visual focus of the user at least partially coincides with the location of the second device, the first device may establish a communication connection to the second device. In this way, once the user looks at the second device, the first device may establish a communication connection to the second device, so that the communication connection does not need to be maintained between the first device and the second device. This reduces power consumption.

S903: The first device obtains collaboration data sent by the second device, where the collaboration data is the data of the preset type.

In this embodiment, after obtaining the data obtaining request sent by the first device, the second device may send the collaboration data to the first device. In this way, the first device can obtain the collaboration data sent by the second device. The collaboration data is the data of the preset type. For example, the collaboration data may be an audio stream played by music software, a desktop document, a picture in a browser, or even mirror data of data displayed on an entire screen of the second device.

In some embodiments, when the collaboration data is mirror data of the entire screen of the second device, before the user triggers the first device and the second device to stop transmitting data, the second device sends the collaboration data to the first device in real time.

S904: The first device displays the collaboration data.

In this embodiment, after obtaining the collaboration data, the first device may load the collaboration data by using a target application on the first device, and display the collaboration data. For example, the target application may be an application that is locally found by the first device based on the collaboration data and that adapts to the collaboration data. For example, when the collaboration data is web page data, the target application may be a browser.

In this way, the user can view the collaboration data in virtual space presented by the first device. This increases content richness of the first device and improves user experience.

For example, FIG. 10 is a schematic flowchart of yet another device control method according to an embodiment of this application. The method mainly relates to a first device and a second device. The first device may be but is not limited to an AR device, a VR device, or an XR device, for example, the foregoing device 300. The second device may be but is not limited to an electronic device located in a same physical environment as the first device, for example, the foregoing device 100, 200, 400, or 500. As shown in FIG. 10, the device control method may include the following steps.

S1001: The second device obtains a first operation of a user, where the first operation is used to trigger the second device to send collaboration data to the first device.

In this embodiment, the user may perform an operation on the second device, to trigger the second device to send the collaboration data to the first device.

In some embodiments, when the collaboration data is data of a single application window, the user may select the single application window on the second device, and indicate the second device to transmit data to the first device. For example, the user drags the application window to a preset location. In this case, the collaboration data is data of an interface currently run by an application selected by the user. For example, when the application selected by the user is a browser, the collaboration data that needs to be transmitted by the second device is data of a current interface of the browser. When the application selected by the user is a presentation, the collaboration data that needs to be transmitted by the second device is all data in the presentation.

When the collaboration data is a part of data in an application window, the user may select only the part of data in an application on the second device, and indicate the second device to transmit the data to the first device. In this case, the collaboration data is the data selected by the user in the application. For example, when the application is the browser, the user may select a picture in the browser, and indicate the second device to transmit the data. In this case, the collaboration data is the picture selected by the user in the browser. When the application is the presentation, the user may select a slide in the presentation, or select a picture on a slide in the presentation, and indicate the second device to transmit the data. In this case, the collaboration data is the slide or the picture on the slide in the presentation.

When the collaboration data is screen display data, the user may select, on the second device, the second device to transmit the screen display data to the first device. For example, a browser window is displayed on the second device but is not displayed in full screen, and desktop data such as a desktop icon, a taskbar, and a wallpaper is further displayed on the screen. In this case, the screen display data includes browser data, the desktop data, and a location distribution relationship between the first device and the second device. In this case, because the screen is refreshed in real time, after data transmission is started and before data transmission is stopped, the second device transmits data on the screen of the second device to the first device in real time.

When the collaboration data is screenshot data of a current screen, the user may select, on the second device, the second device to transmit the screenshot data of the screen to the first device. Then, the second device may convert current instantaneous screen display data of the second device into a screenshot, and then send the screenshot of the current screen to the first device.

When the collaboration data is virtual screen data, the user may select, on the second device, the second device to transmit the virtual screen data to the first device. The virtual screen data is a data stream that is obtained based on an initial desktop of the second device/a desktop mirror obtained at a moment at which a collaborative connection is established and that is not actually displayed on a physical screen of the second device. For example, the user may preset that data of an application is to be displayed on a virtual screen. After the user starts the application, the second device may transmit data of the application to the first device. In this case, the data of the application is the virtual screen data.

In some embodiments, the first operation of the user may be as follows: The user moves an object (for example, an application window) related to the collaboration data to a preset location (for example, a location outside the screen of the second device or a location on the screen of the second device). Alternatively, the user makes a preset gesture. For example, the user may make a specific gesture, and then the second device may transmit the foregoing collaboration data to the first device. Alternatively, the user triggers a preset physical button or virtual button on the second device. For example, the user may tap a button, and then the second device may transmit the foregoing collaboration data to the first device. Alternatively, the user makes a voice including preset content. For example, the user may make a voice that indicates the second device to transmit data displayed on the screen. Alternatively, the user starts a preset object on the second device. For example, the user starts an application that needs to be displayed on the virtual screen, and so on. For example, the first operation may be but is not limited to an operation triggered by the user on the second device when the user wears the first device. In addition, when wearing the first device, the user may still see an ambient physical environment through the first device.

In addition, the user may also preset a type of the data that needs to be transmitted by the second device to the first device. In this way, after the user performs a specific operation, the second device may transmit the data of the specific type to the first device.

S1002: The second device sends the collaboration data to the first device in response to the first operation.

In this embodiment, after obtaining the operation of the user, the second device may send the collaboration data to the first device.

S1003: The first device displays the collaboration data.

In this embodiment, after the second device sends the collaboration data, the first device may obtain the collaboration data. Then, the first device may load the collaboration data by using a target application on the first device, and display the collaboration data. For example, the target application may be an application that is locally found by the first device based on the collaboration data and that adapts to the collaboration data. For example, when the collaboration data is web page data, the target application may be a browser.

In this way, the user can view the collaboration data in virtual space presented by the first device. This increases content richness of the first device and improves user experience.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially or completely performed based on an actual situation. This is not limited herein. In addition, steps in different embodiments may alternatively be combined based on an actual situation, and a solution obtained after combination still falls within the protection scope of this application.

According to the method in the foregoing embodiments, an embodiment of this application provides a computer-readable storage medium. The computer-readable storage medium stores a computer program. When the computer program is run on a processor, the processor is enabled to perform method in the foregoing embodiments.

According to the method in the foregoing embodiments, an embodiment of this application provides a computer program product. When the computer program product runs on a processor, the processor is enabled to perform the method in the foregoing embodiments.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random-access memory (random-access memory, RAM), a flash memory, a read-only memory (read-only memory, ROM), a programmable read-only memory (programmable rom, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC.

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instruction may be stored in the computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numerals in embodiments of this application are merely used for differentiation for ease of description, and are not used to limit the scope of embodiments of this application.

## Claims

1. A device control method, wherein the method comprises:
displaying comment information on a screen of a first device, wherein the comment information is used to visualize an operation interface of at least a part of functions of a second device, the first device is an augmented reality device or a virtual reality device, and the second device is a device in the physical world;
determining a third device, wherein the third device is a device in the physical world; and
transmitting at least a part of data associated with the comment information to the third device.

2. The method according to claim 2, wherein before the transmitting at least a part of data associated with the comment information to the third device, the method further comprises:
determining that a first operation is obtained, wherein the first operation is an operation of selecting the comment information.

3. The method according to claim 1 or 2, wherein the method further comprises:
in response to a movement operation for the comment information, controlling the comment information to move on the screen.

4. The method according to claim 3, wherein the controlling the comment information to move on the screen specifically comprises:
determining that the movement operation is an operation of moving from the second device to the third device; and
controlling the comment information to move on the screen from a current location of the comment information to a location corresponding to the third device on the screen.

5. The method according to any one of claims 1 to 4, wherein the determining a third device specifically comprises any one of the following cases:
a degree of coincidence between an area occupied by the comment information on the screen and a target area on the screen is greater than a preset value, wherein the target area is an area corresponding to a display area of the third device on the screen;
a tap on the third device is obtained; and
a cursor moves to the third device and stays on for preset duration.

6. The method according to any one of claims 1 to 5, wherein before the displaying comment information on a screen of a first device, the method further comprises:
in response to an obtained first instruction, sending a first message to the second device, wherein the first message is used to obtain information related to the operation interface of at least the part of functions of the second device; and
obtaining a second message sent by the second device, wherein the second message comprises the information related to the operation interface of at least the part of functions of the second device.

7. A device control method, wherein the method comprises:
when a user wears a first device, detecting, by the first device, that the user triggers generation of a first signal on the first device, wherein the first device is an augmented reality device, a virtual reality device, or an extended reality device;
sending, by the first device, a data obtaining request to a second device;
obtaining, by the first device, collaboration data sent by the second device, wherein the collaboration data is data of a preset type; and
displaying, by the first device, the collaboration data.

8. The method according to claim 7, wherein
when the user operates a physical button or a virtual button preset on the first device, the first device detects the first signal; or
when the first device obtains a voice made by the user and verbal content comprised in the voice is preset content, the first device detects the first signal; or
when the first device obtains a gesture made by the user and the gesture is a preset gesture, the first device detects the first signal; or
when the first device identifies that a location of a visual focus of the user at least partially coincides with a location of the second device, the first device detects the first signal.

9. The method according to claim 7 or 8, wherein before the sending, by the first device, a data obtaining request to a second device, the method further comprises:
obtaining, by the first device, the location of the visual focus of the user; and
when the location of the visual focus of the user at least partially coincides with the location of the second device, establishing, by the first device, a communication connection to the second device.

10. A device control method, wherein the method comprises:
obtaining, by the first device, collaboration data sent by a second device, wherein the collaboration data is sent by the second device after a first operation of a user is detected, the first operation is used to trigger the second device to send the collaboration data to the first device, and the first device is an augmented reality device, a virtual reality device, or an extended reality device; and
displaying, by the first device, the collaboration data.

11. The method according to claim 10, wherein before the displaying, by the first device, the collaboration data, the method further comprises:
obtaining, by the first device, a first area in which a target object sent by the second device is currently located, wherein the target object is an object presented by the second device based on the collaboration data, and both the collaboration data and the first area are sent by the second device when it is detected that at least a part of the target object is located outside a display area of the second device.

12. The method according to claim 11, wherein the displaying, by the first device, the collaboration data specifically comprises:
determining, by the first device, a second area corresponding to the first area on a screen of the first device; and
displaying, by the first device, the collaboration data in the second area on the screen of the first device.

13. The method according to claim 12, wherein at least a part of the second area is located outside an area corresponding to the display area of the second device on the screen.

14. The method according to claim 12 or 13, wherein transparency of the collaboration data in the second area is greater than a preset value.

15. The method according to any one of claims 12 to 14, wherein after the displaying, by the first device, the collaboration data in the second area on the screen of the first device, the method further comprises:
obtaining, by the first device, a third area in which the target object sent by the second device is currently located, wherein the third area is different from the first area;
determining, by the first device, a fourth area corresponding to the third area on the screen of the first device, wherein the fourth area is different from the second area; and
displaying, by the first device, the collaboration data in the fourth area on the screen of the first device.

16. The method according to any one of claims 12 to 15, wherein after the displaying, by the first device, the collaboration data in the second area on the screen of the first device, the method further comprises:
determining, by the first device, that the target object on the second device is located in a display area of a third device, wherein there is a gap between the second device and the third device; and
transmitting, by the first device, the collaboration data to the third device, and/or stopping displaying the collaboration data on the screen.

17. The method according to claim 10, wherein the first operation is an operation of moving, by the user, an object related to the collaboration data to a preset location; or
the first operation is an operation of making a preset gesture by the user; or
the first operation is an operation of triggering, by the user, a physical button or a virtual button preset on the second device; or
the first operation is an operation of making, by the user, a voice comprising preset content; or
the first operation is an operation of starting a preset object on the second device by the user.

18. A device, comprising:
at least one memory, configured to store a program; and
at least one processor, configured to execute the program stored in the memory, wherein
when the program stored in the memory is executed, the processor is configured to perform the method according to any one of claims 1 to 17.

19. A computer-readable storage medium, wherein the computer-readable storage medium stores a computer program, and when the computer program is run on a processor, the processor is enabled to perform the method according to any one of claims 1 to 17.

20. A computer program product, wherein when the computer program product runs on a processor, the processor is enabled to perform the method according to any one of claims 1 to 17.
